Europäisches Patentamt

European Patent Office

Office européen des brevets

(11) Publication number: **0 123 365**
**B1**

# EUROPEAN PATENT SPECIFICATION

(12)

(45) Date of publication of patent specification: **08.08.90**

(21) Application number: **84200585.2**

(22) Date of filing: **25.04.84**

(51) Int. Cl.⁵: **B 60 G 17/08, F 16 F 9/46**

(54) **Double-acting hydraulic shock absorber with controlled compression cycle for vehicles.**

(30) Priority: **26.04.83 ES 521833**

(43) Date of publication of application:
**31.10.84 Bulletin 84/44**

(45) Publication of the grant of the patent:
**08.08.90 Bulletin 90/32**

(84) Designated Contracting States:
**DE FR GB IT**

(56) References cited:
**FR-A-2 010 548**
**FR-A-2 301 737**
**GB-A-1 363 303**

(73) Proprietor: **BENDIX ESPANA S.A.**
**Calle Balmes, 243**
**E-08006 Barcelona (ES)**

(72) Inventor: **BENDIX ESPANA S.A.**
**Calle Balmes, 243**
**E-08006 Barcelona (ES)**

(74) Representative: **van der Veken, Johannes Adriaan et al**
**EXTERPATENT B.V. P.O. Box 90649**
**NL-2509 LP 's-Gravenhage (NL)**

EP 0 123 365 B1

Courier Press, Leamington Spa, England.

## Description

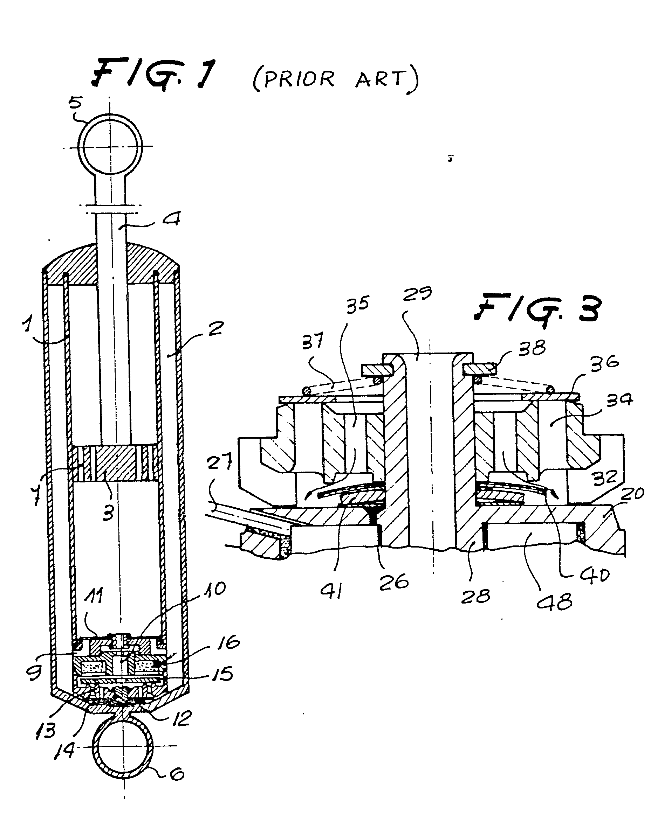

A known type of double acting shock absorber, is shown schematically in Figure 1. It comprises a general body portion in which there is formed a cylinder 1 and an annular reservoir 2 around the cylinder. A piston 3 is slidable within the cylinder and the piston rod 4 thereof projects through one end of the body portion of the shock absorber; the piston rod is pivotally connected by means of the eye member 5 to a fixed point of the body of the vehicle, and a similar eye member 6 which forms part of the opposite end of the body portion of the shock absorber permits the latter to be connected to the corresponding component of the suspension. The piston 3 has ducts 7 and 8 which form a communication between the two chambers that the piston 3 forms in the cylinder, and which each carry valve means (not shown) which open in opposite directions to permit the transfer of damper fluid between the chambers under a given resistance in each case. Disposed at the base of the cylinder 1 is a valve arrangement which has ducts 9 and 10 which form a communication for the lower chamber of the cylinder to the annular reservoir 2, the first thereof having a valve 11 which opens towards the chamber and the second having a valve 12 which opens towards the reservoir. Thus, when the piston 3 moves downwardly in the cylinder 1 (the vehicle is moving towards the road) a part of the hydraulic fluid in the lower chamber flows to the upper chamber through one of the ducts in the piston, and the remainder flows to the annular reservoir 2, lifting the valve 12 which is calibrated to produce the appropriate resistance; when the piston moves upwardly within the cylinder (the suspension recovers), the hydraulic fluid in the upper chamber flows to the lower chamber, the lower chamber being filled up by means of an additional amount of fluid (corresponding to the volume displaced by the piston rod 4) from the reservoir 2, thereby lifting the valve 11 which in turn is resiliently loaded to afford a respective resistance.

It is known that in double-acting shock absorbers as described above the resistance in the compression mode (when the piston is moving downwardly in the cylinder) is the parameter which has the greatest influences upon the performance of the suspension of the vehicle, and that that resistance has to be increased in proportion to increasing speed of movement of the vehicle. Accordingly, if a shock absorber has been designed to provide a suitable performance at high speeds, the suspension is then excessively hard and uncomfortable at lower speeds; similarly shock absorbers which are designed for ordinary commercially available vehicles are inadequate to provide the high levels of services and security at competition speeds.

Accordingly, efforts have been made to improve the known shock absorbers of that kind, by providing them with at least two separate mode of resistance in compression in order that they can operate adequately both in low speed ranges and in high speed ranges, and likewise on different kinds of road surface. Thus, for example, in US Patent US—A—4 031 989 which relates to the construction illustrated in Figure 1 it is proposed that, in parallel with the valve 12 which affords a high level of resistance in compression, the shock absorber also has an additional duct 13 which is closed by a valve 14 which has a low level of resistance in compression (its resistance is lower than that afforded by the valve 12), and by a flow valve whose closure member is formed by a disc 15 which normally closes the parallel duct 13 but which can be opened by a solenoid 16 which can be energised from the electrical system of the vehicle by way of a suitable connection or control arrangement. When the valve 15 is closed, the shock absorber operates with a high level of resistance in the compression mode (hard suspension) and when the valve is open, the lower level of resistance afforded to the flow of hydraulic fluid gives a softer suspension which is suitable for low speeds. However, that valve arrangement suffers from various serious disadvantages from the point of view of manufacture; it is complicated in construction; the various parts of which it is composed do not lend themselves readily to mechanised assembly and the worst problem is that the arrangement of the two combined valves which afford resistance in the compression mode give rise to problems in regard to manufacture and assembly in that it is very difficult to adjust the two valves with the required resistances and it is virtually impossible, without means that are compatible with the production process, to achieve repeatability with such resistances within a desirable range of tolerances.

Confronted with that state of the art, the present invention is concerned with a double-acting hydraulic shock absorber with controlled compression cycle, in particular for automobile vehicles and of the class described hereinbefore, in other words, which comprises a valve arrangement which includes, between the lower chamber in the cylinder and the annular reservoir, one or more ducts including a valve which affords a hard resistance to compression and which opens towards the annular reservoir; one or more ducts including a valve which affords resistance in the recovery mode and which opens towards the lower chamber of the cylinder, and one or more ducts which include, on the one hand, a valve which affords a soft resistance to compression, and, on the other hand, a flow valve whose closure element, which is normally closed, is actuable by a solenoid which can be energised from the electrical system of the vehicle to put the valve which affords a soft resistance to compression into operation, thereby to eliminate or substantially reduce the above-mentioned problems.

Thus, in accordance with the improvements of the present invention, the valve arrangement which communicates the lower chamber of the cylinder with the annular reservoir comprises an upper body portion which is fixed to the lower end of the cylinder, forming the bottom thereof, and a lower body portion which is fixed to the upper body portion in such a way as to form therewith an annular chamber communicating with the annular reservoir and an internal chamber communicating with the lower chamber of the cylinder, the upper body portion having passing therethrough ducts which communicate the lower chamber of the cylinder with the annular chamber and are associated with respective closure elements that are resiliently loaded to afford the resistances in the recovery mode and in the hard compression mode, wherein the wall of the internal chamber of the lower body portion which is more remote from the upper body portion has passing theerethrough ducts which communicate same with the annular reservoir and with which there are associated, externally to the body portion, the closure element which affords a soft resistance to compression, and, internally, with seats for the control valve for the closure member which affords a soft resistance to compression, the solenoid of which is formed in the opposite wall of said chamber.

A particularly advantageous embodiment is obtained when the upper body portion has a central aperture which is disposed upon a coaxial neck portion of the lower body portion, through which passes an axial conduit which forms a communication between the lower chamber of the cylinder and the internal chamber of the body portion, and the annular chamber is defined by projections or lugs projecting from the mutually oppositely disposed walls of the upper and/or lower body portions. In that case, the recovery ducts may be formed around a circumference which is adjacent to the periphery of the upper body portion, and the closure element thereof is a laminar disc which is urged against the ducts by a conical spring supported by an abutment or projection fixed to the projecting end of the coaxial neck portion of the lower body portion. In their turn, the ducts which afford a high level resistance in the compression mode may be distributed around a circumference which is adjacent to the central aperture of the upper body portion and the closure member thereof is a resilient metal plate or disc which is fitted on to the coaxial neck portion of the upper body portion and which is engaged by means of its edge against an annular seat which extends around said ducts, by means of a resilient conical disc or plate trapped between the lower body portion and the central part of the closure plate.

Preferably, the lower body portion comprises an upper ferromagnetic member, the coaxial neck portion extending from the upper surface thereof while the lower surface thereof has an annular groove which defines a housing for the coil of the solenoid, the edges thereof forming the pole pieces thereof and a mounting seat for a non-magnetic bowl-shaped member which defines the internal chamber in said body portion and the lower wall portion of the chamber. The ducts which afford a low level of resistance in the compression mode may be formed at a circumference which is concentric to the non-magnetic member and the low-resistance closure member may be formed by a disc or plate of resilient metal which is fixed centrally by clinching or riveting a stub portion which projects centrally from the outward surface of said member, or a rivet which is fitted in place, in such a way that the edge thereof bears with the desired preloading against an annular seat which extends around the ducts. Two annular ribs which are disposed on both sides of the circumferential series of low-resistance ducts form a valve seat for a ferromagnetic closure disc or plate which is movable axially within the chamber in the lower body portion and which completes the magnetic circuit of the solenoid and which is urged resiliently against the seating ribs.

The accompanying drawings show diagrammatic views of a preferred embodiment of the invention by way of example thereof without limiting the scope of the invention, and for comparative purposes, a diagrammatic view of a conventional double-acting shock absorber.

Figure 1 is a diagrammatic view in longitudinal section of a double-acting shock absorber in accordance with the prior art and as described hereinbefore;

Figure 2 shows an axial section on a larger scale of a valve arrangement which incorporates the improvements of the present invention and which can be used in a shock absorber of the type shown in Figure 1;

Figure 3 is a partial axial section corresponding to Figure 2 and shows the mode of operation of the closure member which affords a high level of resistance in the compression mode;

Figure 4 is an equivalent view to Figure 3, showing the mode of operation of the recovery closure member; and

Figure 5 is an axial section of the valve arrangement according to Figure 2 showing the operating position of the clousure member which affords a low level of resistance in the compression mode.

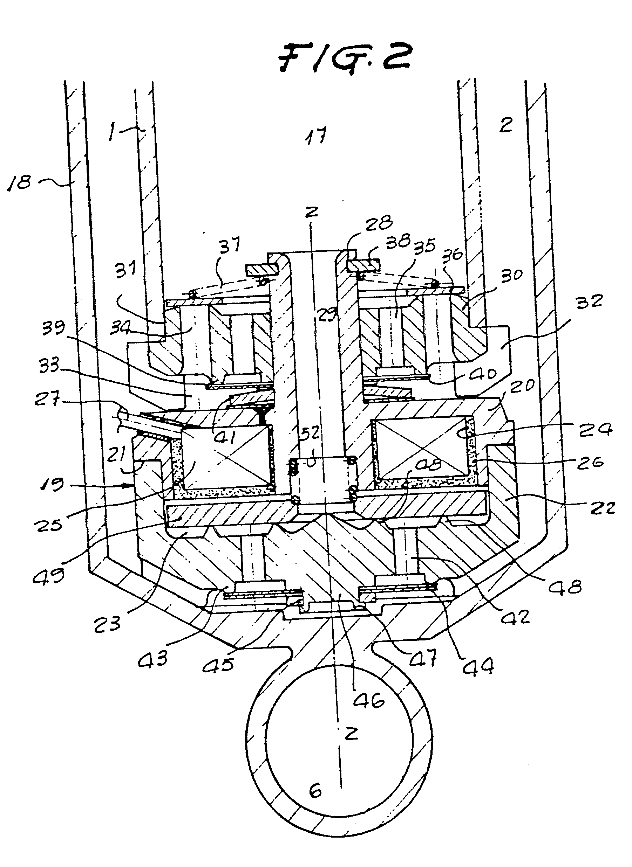

Figure 2 shows the cylinder 1 within which the piston 3 is displaceable, forming the lower chamber 17, and the body portion 18 of the shock absorber which, with the cylinder 1, forms the annular reservoir 2 for the hydraulic fluid, communicating with the above-mentioned chamber 17 by way of the valve arrangement which will be described hereinafter.

The valve arrangement comprises a lower body portion which is indicated by general reference numeral 19 and formed by an upper member 20 which is provided with a downwardly directed seat 21 and into which the edge of a lower bowl-shaped member 22 is fitted as a press fit and sealed with respect to the hydraulic fluid. With the member 20, the member 22 forms an internal chamber 23.

The upper member 20, which is of magnetic steel, is provided in its downward surface, which faces towards the chamber 23, with an annular groove 24 which forms a housing for a solenoid coil 25 which is locked in position by means of a lining 26 of suitable synthetic resin, and which can be energised in conventional manner by conductors 27. Extending upwardly from the upward surface of the member 20 is a coaxial tubular neck portion 28 having a central conduit 29 which communicates the lower chamber 17 of the cylinder with the internal chamber 23 in the lower portion 19.

Press fitted on to the neck portion 28 is an upper disc-shaped body portion 30, the edge of which has a peripheral seat or step 31 with which it is sealingly fitted to the lower edge of the cylinder 1, thus forming the bottom of the cylinder or the chamber 17 thereof. The position in which the body portion 30 is fitted with respect to the lower body portion 19 is determined by the provision of abutment fins 32 which project from the edge of the body portion 30 and which come to bear against the upward surface of the member 20, forming between the two body portions an annular chamber 33 which, as will be appreciated, communicates directly with the annular reservoir 2.

Extending longitudinally through the disc-like body portion 30 is a series of holes which are disposed in two groups thereof, as indicated at 34 and 35, being disposed on two circumferences which are concentric with the axis Z—Z of the arrangement, in such a way that all the holes are capable of forming a communication between the reservoir 2 and the chamber 17. The holes 34 of the outward array thereof constitute the recovery or return ducts through which the hydraulic fluid contained in the annular reservoir 2 flows to the lower chamber 17 of the shock absorber cylinder while the piston 13 is moving upwardly. The upper openings of the holes 34 are developed in the form of valve seats and applied thereto, so as to close same, is a closure element 36 in the form of an annular disc of thin metal plate, the central opening of which leaves a passage completely free for the other holes 35. The loading required to produce the damping resistance in the recovery cycle is produced by means of a conical spring 37 which is compressed between the disc member 36 and an abutment circlip 38 which fits into a corresponding groove in the end of the neck portion 28.

On the other hand, in the annular chamber 33, the openings of the holes 35 are surrounded by an annular rib which forms a valve seat 39 for the edge of steel plate which forms the closure element 40 that affords the hard compression resistance in the compression cycle in operation of the shock absorber. The closure element 40 is fixed in position by means of a conical disc or plate 41 which, in the asssembled condition, is trapped between the closure element 40 and the upper surface of the member 20.

In the lower body portion 19, the base of the lower member 22 has passing therethrough a circumferential array of holes 42 which form the ducts for generating the soft resistance in the compression cycle, and for that purpose, the lower openings thereof are contained within an annular rib 43 which forms a valve seat for a closure plate or disc 44 having a central opening which fits on to a step 45 of a projecting stub portion 46 and is fixed in position by clinching or riveting the edges of the portion 46, as indicated at 47. The upper openings of the ducts 42 open within the chamber 43 between two concentric annular ribs 48 which together form the valve seat for a closure plate 49 which, in the same way as in the prior-art arrangements, constitutes the armature of the solenoid and which can be moved away from said seats when the solenoid is energised by conventional means which are not described, because they do not form part of the subject-matter of this invention. The plate 49 has a central opening 50 to permit the hydraulic fluid to flow therethrough, and is urged towards the rest position shown in Figure 2 by means of a coil spring 51 housed in an enlarged portion 52 of the conduit 29.

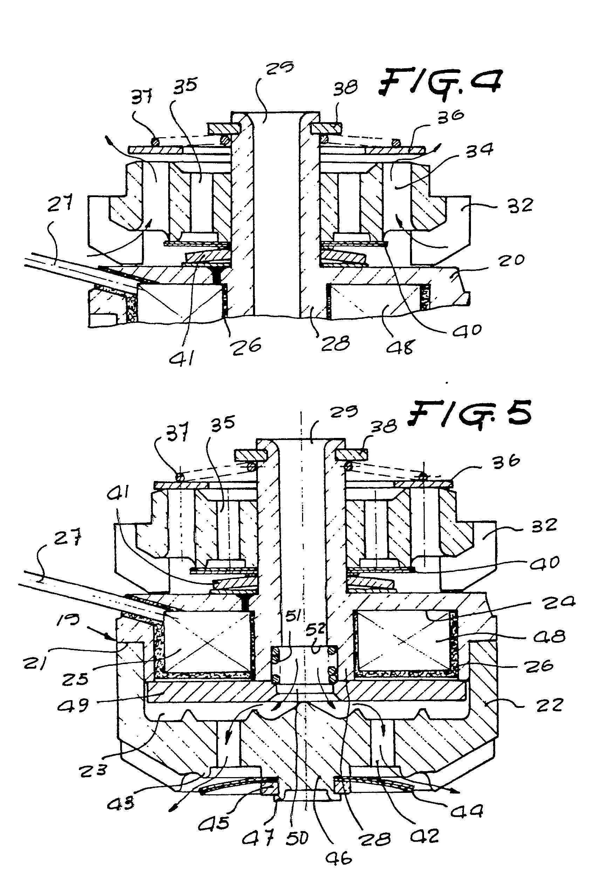

The mode of operation of the arrangement, in the course of the operating movements of the shock absorber, is identical to that of the prior-art constructions of which an example is shown in Figure 1, and retains all the advantages and functional qualities to be found therein. The mode of operation of the arrangement is shown in graphic form in Figures 2 to 5; Figure 2 shows the rest condition of the shock absorber, Figure 3 shows by means of arrows the flow of hydraulic fluid during the phase involving compression against a hard resistance, Figure 4 shows the flow of fluid during the suspension recovery cycle, and Figure 5 shows in particular the flow pattern of the hydraulic fluid during the compression cycle involving a soft resistance.

Study of the drawings will show the way in which the improvements of the present invention attain the propsed objectives. In fact, firstly, it is clear that the three valves which result into the three modes of operation described are totally independent of each other, so that adjustment of some does not affect the others. The assembly preloading thereof may be determined accurately and consistently within a production series and all the parts of the valve arrangement, including the valves, lend themselves perfectly to automated assembly in groups and sub-groups, as may be appropriate in each production situation.

It will be apparent that, in accordance with the invention, any technical equivalent of the various constructional features described may be employed. For example, the clinched or riveted stub portion 46 may be replaced by a rivet that is fitted to the assembly.

**Claims**

1. Double-acting hydraulic shock absorber with controlled compression cycle, for vehicles, comprising a valve arrangement which includes, between the lower chamber (17) in the cylinder (1) and the annular reservoir (2), one or more ducts (35) including a valve (40) which affords a hard resistance to compression and which opens towards the annular reservoir (2); one or more ducts (34) including a valve (36) which affords resistance in the recovery mode and which opens towards the lower chamber of the cylinder (1) and one or more ducts (42) which include, on the one hand, a valve (44) which affords a soft resistance to compression, and, on the other hand, a flow valve (49) whose closure element is actuable by a solenoid (25) which can be energised from the electrical system of the vehicle to put the valve (44) which affords a soft resistance to compression into operation, characterised in that the valve arrangement which communicates the lower chamber (17) of the cylinder (1) with the annular reservoir (2) comprises a lower body (19) portion forming the bottom thereof, and an upper body (30) portion which is fixed to the lower end of the cylinder (1) and to the lower body portion in such a way as to form therewith an annular chamber (33) communicating with the annular reservoir (2) and an internal chamber (23) communicating with the lower chamber (17) of the cylinder (1), the upper body (30) portion having passing therethrough ducts (34, 35) which communicate the lower chamber (17) of the cylinder (1) with the annular chamber (33) and are associated with respective closure elements (36, 40) that are resiliently loaded to afford the resistances in the recovery mode and in the hard compression mode, wherein the wall of the internal chamber (23) of the lower body (19) portion which is more remote from the upper body (30) portion has passing therethrough ducts (42) which communicate same with the annular reservoir (2) and with which there are associated, externally to the body portion, the closure element (44) which affords a soft resistance to compression, and, internally, with seats for the plate (49) for the closure member which affords a soft resistance to compression, the solenoid (25) of which is formed in the opposite wall of the internal chamber (23).

2. Double-acting shock absorber with controlled compression cycle, for vehicles, according to claim 1, characterised in that the upper body (30) portion has a central opening which is fixed on to a coaxial neck (28) portion of the lower body (19) portion and through which longitudinally passes an axial conduit (29) which communicates the lower chamber (17) of the cylinder (1) with the internal chamber (23) of the lower body (19) portion and the annular chamber (33) is defined by stop portions projecting from the mutually oppositely disposed walls of said upper (30) and/or lower (19) body portions.

3. Double-acting shock absorber with controlled compression cycle, for vehicles, according to claims 1 and 2, characterised in that the recovery ducts (34) are formed on a circumference which is adjacent to the periphery of the upper body (30) portion and the closure element (36) thereof is a laminar disc which is urged against the openings of said ducts by a conical spring (37) which is supported by an abutment (38) fixed to the projecting end of the coaxial neck (28) portion of the lower body portion (19).

4. Double-acting shock absorber with controlled compression cycle, for vehicles, according to claims 1 and 2, characterised in that the ducts (35) which afford a high resistance to compression are distributed over a circumference which is adjacent to the central aperture (29) of the upper body (30) portion and the closure element thereof is a disc (40) of resilient metal which is fitted on to the coaxial neck (28) portion of the lower body portion (19) and which is urged by means of its edge against an annular seat which is disposed around said ducts (35) by means of a conical resilient disc (41) which is trapped between the lower body portion (19) and the central part of the closure disc (40).

5. Double-acting shock absorber with controlled compression cycle, for vehicles, according to claims 1 and 2, characterised in that the lower body portion (19) comprises an upper ferromagnetic member (20), from the upper part of which projects the coaxial neck (28) portion and the lower surface of which has an annular groove (24) which defines a housing for the coil of the solenoid (25) and the edges of which form the pole pieces thereof, and a fitting seat (21) for a non-magnetic bowl-shaped member (22) which defines the internal chamber (23) of said body portion and the lower wall portion of said chamber.

6. Double-acting shock absorber with controlled compression cycle, for vehicles, according to claims 1, 2 and 5, characterised in that the ducts (42) which afford a low resistance to compression are formed on a concentric circumference of the non-magnetic member (22) and the low-resistance closure element (44) is formed by a resilient disc which is fixed centrally by riveting or clinching, in such a way that the edge thereof bears with the desired preloading against an annular seat (45) which is disposed around the ducts (42).

7. Double-acting shock absorber with controlled compression cycle, for vehicles, according to claims 1, 2, 5 and 6, characterised in that the internal wall of the non-magnetic member (22) comprises two annular ribs (48) disposed on both sides of the circumferential array of low-resistance ducts (42) forming a valve seat for a ferromagnetic closure disc (49) which completes the magnetic circuit of the solenoid (25) and is urged resiliently against said said seating ribs (48).

**Patentansprüche**

1. Doppelt wirkender hydraulischer Stoßdämpfer mit gesteuertem Kompressionszyklus, für Fahrzeuge, mit einer Ventilanordnung, die, zwischen der unteren Kammer (17) in dem Zylinder (1) und dem ringförmigen Reservoir (2), einen oder mehrere Kanäle (35) mit einem Ventil (40) aufweist, welches einen hohen Kompressionswiderstand bietet und welches in Richtung auf das ringförmige Reservoir (2) öffnet; mit einem oder mehreren Kanälen (34) mit einem Ventil (36), welches im Rückführungsbetrieb Widerstand leistet und welches in Richtung auf die untere Kammer des Zylinders (1) öffnet, und einem oder mehreren Kanälen (42), die einerseits ein Ventil (44), welches einen geringen Kompressionswiderstand bietet, und andererseits ein Strömungsventil (49) aufweisen, dessen Schließelement durch ein Solenoid (25) betätigbar ist, welches über das elektrische System des Fahrzeugs versorgt werden kann, um das Ventil (44), welches einen geringen Kompressionswiderstand aufweist, in Betrieb zu setzen, dadurch gekennzeichnet, daß die Ventilanordnung, die die untere Kammer (17) des Zylinders (1) mit dem ringförmigen Reservoir (2) verbindet, einen unteren Körper (19), welcher den Boden der Ventilanordnung bildet, und einen oberen Körper (30) aufweist, der am unteren Ende des Zylinders (1) und am unteren Körper derart befestigt ist, daß damit eine mit dem ringförmigen Reservoir (2) in Verbindung stehende ringförmige Kammer (33) und eine mit der unteren Kammer (17) des Zylinders (1) kommunizierende innere Kammer (23) gebildet wird, daß der obere Körper (30) Durchflußkanäle (34, 35) aufweist, welche die untere Kammer (17) des Zylinders (1) mit der ringförmigen Kammer (33) verbinden und welchen jeweils Schließelemente (36, 40) zugeordnet sind, die federbelastet sind, um die Widerstände im Rückführungsbetrieb und im Hochkompressionsbetrieb zu gewährleisten, wobei die Wandung der inneren Kammer (23) des unteren Körpers (19), die weiter von dem oberen Körper (30) entfernt ist, Durchflußkanäle (42) aufweist, die ebenfalls mit dem ringförmigen Reservoir (2) in Verbindung stehen, und welchen, außerhalb des Körpers, das Schließelement (44) zugeordnet ist, welches einen geringen Kompressionswiderstand aufweist, und innerhalb Sitze für die Platte (49) für das Schließelement aufweist, welches einen geringen Kompressionswiderstand aufweist und dessen Solenoid (25) an der gegenüberliegenden Wandung der inneren Kammer (23) angeordnet ist.

2. Doppelt wirkender Stoßdämpfer mit gesteuertem Kompressionszyklus, für Fahrzeuge, nach Anspruch 1, dadurch gekennzeichnet, daß der obere Körper (30) eine zentrale Öffnung aufweist, die an einem koaxialen Halsabschnitt (28) des unteren Körpers (19) befestigt ist und durch den in Längsrichtung ein axialer Kanal (29) verläuft, welcher die untere Kammer (17) des Zylinders (1) mit der inneren Kammer (23) des unteren Körpers (19) verbindet, und daß die ringförmige Kammer (33) durch Anschlagabschnitte bestimmt ist, die von den sich gegenüberliegend angeordneten Wandungen des oberen Körpers (30) und/oder unteren Körpers (19) überstehen.

3. Doppelt wirkender Stoßdämpfer mit gesteuertem Kompressionszyklus, für Fahrzeuge, nach Anspruch 1 und 2, dadurch gekennzeichnet, daß die Rückführungskanäle (34) auf einem Umfang ausgebildet sind, der benachbart der Peripherie des oberen Körpers (30) ist und daß das zugehörige Schließelement (36) eine lamellenförmige Scheibe ist, welche durch eine konische Feder (37) gegen die Öffnungen der Kanäle gedrückt ist, die wiederum über einen Anschlag (38) fest am überstehenden Ende des koaxialen Halsabschnittes (28) des unteren Körpers (19) gehalten ist.

4. Doppelt wirkender Stoßdämpfer mit gesteuertem Kompressionszyklus, für Fahrzeuge, nach Anspruch 1 und 2, dadurch gekennzeichnet, daß die Kanäle (35), die einen hohen Kompressionswiderstand aufweisen, über einen Umfang verteilt sind, der benachbart der zentralen Öffnung (29) des oberen Körpers (30) ist und daß das zugehörige Schließelement eine Scheibe (40) aus elastischem Metall ist, die an dem koaxialen Halsabschnitt (28) des unteren Körpers (19) befestigt ist und die mit ihrem Rand durch eine konische, elastische Scheibe (41), die zwischen dem unteren Körper (19) und dem zentralen Teil der Verschlußscheibe (40) gefangen ist, gegen einen ringförmigen Sitz gedrückt ist, der um die Kanäle (35) herum angeordnet ist.

5. Doppelt wirkender Stoßdämpfer mit gesteuertem Kompressionszyklus, für Fahrzeuge, nach Anspruch 1 und 2, dadurch gekennzeichnet, daß der untere Körper (19) ein oberes, ferromagnetisches Element (20) aufweist, von dessen oberem Teil der koaxiale Halsabschnitt (28) übersteht, und dessen untere Oberfläche eine ringförmige Nut (24) aufweist, die ein Gehäuse für die Wicklung des Solenoids (25) bildet, und dessen Ränder die Polstücke bilden, und einen Paßsitz (21) für ein nichtmagnetisches schalenförmiges Teil (22) aufweist, durch welches die innere Kammer (23) dieses Körpers und der untere Wandabschnitt dieser Kammer bestimmt werden.

6. Doppelt wirkender Stoßdämpfer mit gesteuertem Kompressionszyklus, für Fahrzeuge, nach Anspruch 1, 2 und 5, dadurch gekennzeichnet, daß die Kanäle (42), die einen geringen Kompressionswiderstand aufweisen, auf einem konzentrischen Umfang des nichtmagnetischen Teils (22) ausgebildet sind und das Schließelement (44) mit geringem Widerstand durch eine elastische Scheibe gebildet ist, die zentrisch durch Nietung oder Kaltnietung (Stauchung) derart befestigt ist, daß sich ihr Rand mit der gewünschten Vorspannung gegen einen ringförmigen Sitz (45) abstütz, der um die Kanäle (42) herum angeordnet ist.

7. Doppelt wirkender Stoßdämpfer mit gesteuertem Kompressionszyklus, für Fahrzeuge, nach Anspruch 1, 2, 5 und 6, dadurch gekennzeichnet, daß die innere Wandung des nichtmagnetischen Teils (22) zwei ringförmige Rippen (48) aufweist, die auf beiden Seiten der kreisförmigen Anordnung der Kanäle (42) mit geringem Widerstand angeordnet sind und einen Ventilsitz für die ferromagnetische Schließscheibe (49) bilden, die den magnetischen Kreis des Solenoids (25) vervollständigt und die elastisch gegen die Dichtrippen (48) gedrückt ist.

**Revendications**

1. Amortisseur hydraulique à double effet ayant un cycle commandé de compression et destiné à des véhicules, comprenant un ensemble à clapets qui comporte, entre la chambre inférieure (17) formée dans le cyclindre (1) et le réservoir annulaire (2), un ou plusieurs conduits (35) comportant un clapet (40) qui présente une résistance élevée à la compression et qui s'ouvre vers le réservoir annulaire (2), un ou plusieurs conduits (34) comprenant un clapet (36) qui introduit une résistance en mode d'allongement et qui s'ouvre vers la chambre inférieure du cylindre (1), et un ou plusieurs conduits (42) qui comprennent d'une part un clapet (44) qui introduit une résistance faible à la compression et d'autre part une soupape de débit (49) dont l'obturateur peut être déplacé par un électro-aimant (25) qui peut être excité par le circuit électrique du véhicule afin que le clapet (44) qui introduit une résistance réduite à la compression soit mis en jeu, caractérisé en ce que l'ensemble à clapets qui fait communiquer la chambre inférieure (17) du cylindre (1) avec le réservoir annulaire (2) comporte une partie inférieure de corps (19) formant le bas de celui-ci, une partie supérieure de corps (30) fixée à l'extrémité inférieure du cylindre (1) et à la partie inférieure de corps de manière qu'elle forme, avec elle, une chambre annulaire (33) communiquant avec le réservoir annulaire (2) et une chambre interne (23) communiquant avec la chambre inférieure (17) du cylindre (1), la partie supérieure de corps (30) ayant des conduits (34, 35) qui font communiquer la chambre inférieure (17) du cylindre (1) avec la chambre annulaire (33) et qui sont associés à des clapets respectifs (36, 40) qui sont rappelés élastiquement afin qu'ils introduisent des résistances en mode d'allongement et en mode à résistance élevée à la compression, la paroi de la chambre interne (23) de la partie inférieure de corps (19) qui est la plus éloignée de la partie supérieure de corps (30) ayant des conduits (42) qui la traversent et qui font communiquer la chambre avec le réservoir annulaire (2) et avec lesquels sont associés, à l'extérieur de la partie du corps, l'obturateur (44) qui introduit une résistance réduite à la compression et, à l'intérieur, des sièges destinés à coopérer avec la plaque (49) de la soupape qui introduit une résistance réduite à la compression, et dont l'électro-aimant (25) est formé dans la paroi opposée de la chambre interne (23).

2. Amortisseur à double effet ayant un cycle de compression commandé destiné à des véhicule et selon la revendication 1, caractérisé en ce que la partie supérieure de corps (30) comporte une ouverture centrale qui est logée sur une partie coaxiale de col (28) de la partie inférieure de corps (19) et dans laquelle passe longitudinalement un conduit axial (29) qui fait communiquer la chambre inférieure (17) du cylindre (1) avec la chambre interne (23) de la partie inférieure de corps (19), et en ce que la chambre annulaire (33) est délimitée par des parties de butée dépassant des parois opposées des parties supérieures (30) et/ou inférieure (19) de corps.

3. Amortisseur à double effet ayant un cycle de compression commandé, destiné à des véhicules et selon les revendications 1 et 2, caractérisé en ce que les conduits (34) d'allongement sont formés sur une circonférence qui est adjacente à la périphérie de la partie supérieure de corps (30) et en ce que son obturateur (36) est un disque plat qui est repoussé contre les ouvertures des conduits par un ressort conique (37) supporté par une butée (38) fixée à l'extrémité en saillie de la partie coaxiale de col (28) de la partie inférieure de corps (19).

4. Amortisseur à double effet ayant un cycle de compression commandé, destiné à des véhicules et selon les revendications 1 et 2, caractérisé en ce que les conduits (35) qui assurent une résistance élevée à la compression sont répartis sur une circonférence qui est adjacente à l'ouverture centrale (29) de la partie supérieure de corps (30) et en ce que son obturateur est un disque (40) d'un métal élastique qui est monté sur la partie coaxiale de col (28) de la partie inférieure de corps (19) et qui est rappelé par son bord contre un siège annulaire qui est disposé autour des conduits (35) par un disque élastique conique (41) qui est piégé entre la partie inférieure de corps (19) et la partie centrale du disque d'obturation (40).

5. Amortisseur à double effet ayant un cycle de compression commandé, destiné à des véhicules et selon les revendications 1 et 2, caractérisé en ce que la partie inférieure de corps (19) comprend un organe ferromagnétique supérieur (20) à la partie supérieure duquel dépasse la partie coaxiale de col (28) et à la surface inférieure duquel est disposée une gorge annulaire (24) qui délimite un logement pour le bobinage de l'électro-aimant (25) et dont les bords forment les pièces polaires de ce dernier, et un siège (21) de logement d'un organe non magnétique (22) en forme de cuvette qui délimite la chambre interne (23) de la partie de corps et la partie de paroi inférieure de la chambre.

6. Amortisseur à double effet ayant un cycle de compression commandé, destiné à des véhicules et selon les revendications 1, 2 et 5, caractérisé en ce que les conduits (42) qui donnent une faible résistance à la compression sont formés sur une circonférence concentrique à l'organe non magnétique (22) et en ce que l'obturateur (44) introduisant une faible résistance est formé par un disque élastique qui est fixé au centre par rivetage ou bridage de manière que son bord soit en appui, avec la charge préalable voulue, contre un siège annulaire (45) qui est placé autour des conduits (42).

7. Amortisseur à double effet ayant un cycle de commande commandé, destiné à des véhicules et selon les revendications 1, 2, 5 et 6, caractérisé en ce que la paroi interne de l'organe non magnétique (22) comprend deux nervures annulaires (48) disposées des deux côtés de la série circonférentielle de conduits (42) introduisant une faible résistance et formant un siège d'obturation destiné à coopérer avec un disque ferromagnétique d'obturation (49) qui ferme le circuit magnétique de l'électro-aimant (25) et qui est rappelé élastiquement contre les nervures formant siège (48).

EP 0 123 365 B1

FIG.1 (PRIOR ART)

FIG.3

# FIG. 2

FIG.4

FIG.5